# EUROPEAN PATENT APPLICATION

(11) **EP 2 113 376 A1**
(43) Date of publication of application: **04.11.2009**
(21) Application number: 08155265.5
(22) Date of filing: 28.04.2008
(51) Int. Cl.: B32B 3/10, D03D 15/00, A41D 31/00, F41H 5/04

(54) **Ballistic-resistant articles comprising tapes**

(71) Applicant: Teijin Aramid B.V., 6827 AV Arnhem (NL)
(72) Inventor: Winkler, Ernst Michael, 6824 JX Arnhem (NL); Journée, Marinus Johannes Gerardus, 6924 BM Loo (NL); Peters, Martinus Wilhelmus Maria Gemma, 6521 KK Nijmegen (NL); De Weijer, Anton Peter, 6525 PN Nijmegen (NL)
(74) Representative: Heimann, Anette

(57) **Abstract**

Ballistic-resistant moulded article comprising a compressed stack of sheets comprising tapes of a reinforcing material, **characterised in that** at least one sheet comprises woven tapes as weft and as warp.
A method for manufacturing the ballistic-resistant moulded article is also claimed.

## Description

The present invention pertains to ballistic-resistant articles comprising tapes, and to a method for manufacturing thereof.
Ballistic resistant articles comprising tapes are known in the art.

W02006/107197 describes a method for manufacturing a laminate of polymeric tapes in which polymeric tapes of the core-cladding type are used, in which the core material has a higher melting temperature than the cladding material, the method comprising the steps of biasing the polymeric tapes, positioning the polymeric tapes, and consolidating the polymeric tapes to obtain a laminate.
EP 1627719 describes a ballistic resistant article consisting essentially of ultra-high molecular weight polyethylene which comprises a plurality of unidirectionally oriented polyethylene sheets cross-plied at an angle with respect to each other and attached to each other in the absence of any resin, bonding matrix, or the like.
WO 2008/040506 describes a process for producing a laminate built up from at least two monolayers of polymeric tapes wherein a first monolayer of parallel unidirectional tapes is formed, a second monolayer of parallel unidirectional tapes is formed, and wherein the monolayers are stacked in such a manner that the tapes in the monolayers are oriented in the same direction, with the tapes in one monolayer being offset to the tapes in adjoining monolayers. The thus-formed stack is then consolidated to form a laminate. If so desired, panels may be formed by stacking the laminates, e.g., in such a manner that the tapes in one laminate are in a direction perpendicular to tapes in adjoining laminates.
WO 2008/040510 describes a process for producing a fabric comprising at least a layer of unidirectionally arranged polymeric tapes wherein the tapes are woven with a binding thread and the tapes are consolidated with the thread at a temperature below the consolidation temperature. The monolayers of unidirectionally oriented polymeric tapes are combined with each other in cross-ply orientation.

While the references mentioned above describe ballistic-resistant materials with adequate properties, there is still room for improvement. More in particular, there is need for a ballistic resistant material which combines a high ballistic performance with a low areal weight and a good stability, in particular well-controlled delamination properties. The present invention provides such a material.
The material of the present invention has also processing advantages. In the ballistic materials of the prior art, the tapes are used in unidirectional monolayers, which are then stacked to form a ballistic material. The stacking takes place in the form of a cross-ply, that is, two adjacent monolayers are placed in such a manner that the direction of the fibres or tapes in the unidirectional monolayer is at an angle, generally a 90° angle, to the direction of the fibres or tapes in an adjacent monolayer. This cross-plying process is an expensive step in the manufacture of ballistic materials, and therefore there is need for a process in which this cross-plying process can be dispensed with. The present invention provides such a process.

The present invention therefore pertains to a ballistic-resistant moulded article comprising a compressed stack of sheets comprising tapes of a reinforcing material, **characterised in that** at least one sheet comprises woven tapes as weft and as warp.

In the present invention, a tape is defined as an object of which the length, i.e., the largest dimension of the object, is larger than the width, the second smallest dimension of the object, and the thickness, i.e., the smallest dimension of the object, while the width is in turn larger than the thickness. More in particular, the ratio between the length and the width generally is at least 2, Depending on tape width and stack size the ratio may be larger, e.g., at least 4, or at least 6. The maximum ratio is not critical to the present invention and will depend on processing parameters. As a general value, a maximum length to width ratio of 200 000 may be mentioned. The ratio between the width and the thickness generally is more than 10:1, in particular more than 50:1, still more in particular more than 100:1. The maximum ratio between the width and the thickness is not critical to the present invention. It generally is at most 2000:1.
The width of the tape generally is at least 1 mm, more in particular at least 2 mm, still more in particular at least 10 mm, even more in particular at least 20 mm, even more in particular at least 40 mm. The width of the tape is generally at most 200 mm. The thickness of the tape is generally at least 8 microns, in particular at least 10 microns. The thickness of the tape is generally at most 150 microns, more in particular at most 100 microns.

Within the present specification, the term sheet refers to an individual sheet comprising tapes of a reinforcing material, which sheet can individually be combined with other, corresponding sheets. The sheet may or may not comprise a matrix material, as will be elucidated below.

In the present invention, at least one sheet in the ballistic-resistant moulded article comprises woven tapes as weft and warp. Obviously, the effect of the present invention will be increased when more than one sheet comprises woven tapes as weft and warp. More in particular, it is preferred for at least 30% of the sheets in the ballistic-resistant moulded article to comprise woven tapes as weft and warp, more in particular at least 50%, even more in particular at least 70%, still more in particular at least 85%, even more in particular at least 95%.

There are various ways in which tapes can be applied in warp and weft. The weft tape can cross over one, two, or more warp tapes, and the sequential weft tapes can be applied alternating or parallel.
One embodiment in this respect is the plain weave, wherein the warp and weft are aligned so that they form a simple criss-cross pattern. It is made by passing each weft tape over and under each warp tape, with each row alternating, producing a high number of intersections.
A further embodiment is based on the satin weave. In this embodiment, two or more weft tapes float over a warp tape, or vice versa, two or more warp tapes float over a single weft tape.
A still further embodiment is derived from the twill weave. In this embodiment, one or more warp tapes alternately weave over and under two or more weft tapes in a regular repeated manner. This produces the visual effect of a straight or broken diagonal 'rib' to the fabric.
A still further embodiment is based on the basket weave. Basket weave is fundamentally the same as plain weave except that two or more warp fibres alternately interlace with two or more weft fibres. An arrangement of two warps crossing two wefts is designated 2x2 basket, but the arrangement of fibre need not be symmetrical. Therefore it is possible to have 8x2, 5x4, etc.
A still further embodiment is based on the mock leno weave. Mock leno weave is a version of plain weave in which occasional warp tapes, at regular intervals but usually several tapes apart, deviate from the alternate under-over interlacing and instead interlace every two or more tapes. This happens with similar frequency in the weft direction, and the overall effect is a fabric with increased thickness, rougher surface, and additional porosity.
Each weave type has associated characteristics. For example, where a system is used in which the weft crosses one, or a small number, of warp tapes, and the individual weft tapes are used alternating, or almost alternating, the sheet will contain a relatively large number of intersections. An intersection, in this context, is a point where a weft tape goes from one side of the sheet, the A side, to the other side of the sheet, the B side and an adjacent weft tape goes from the B side to the A side of the sheet.
Where a system is used in which the weft crosses one, or a limited number of warp tapes, or vice versa, where the warp crosses one or a limited number of weft tapes, a large number of deflection lines will exist. Deflection lines occur where one tape goes from one side of the sheet to the other side. It is formed by the edge of the crossover tape. While not wishing to be bound by any theory it is believed that these deflection lines contribute to the dissipation of impact energy in the X-Y direction of the sheet.

Within the context of the present invention the use of plain weaves may be preferred, because they are relatively easy to manufacture, and because they are homogeneous in that a rotation of 90° will not change the nature of the material, combined with good ballistic performance.

Tape weaving is known in the art. For a very attractive tape weaving process, reference is made to EP 1354991.

The tapes of reinforcing material in the warp and the weft may be the same or different. They can be of different materials, of different thickness, and of different widths. The use of different tapes may be advantageous for optimising the properties of the final product, but the use of the same tapes may be the same for reasons of process efficiency. In one embodiment, the ratio between the width of the tapes in the weft direction and the width of the tapes in the warp direction is between 5:1 and 1:5, in particular between 2:1 and 1:2.

In one embodiment of the present invention, the ballistic-resistant moulded article according to the contains sheets comprising woven tapes as weft and as warp stacked on top of each other, the stacking being carried out in such a manner that the tape intersections of one sheet are not stacked on top of the tape intersections of neighbouring sheets. In this manner, a more homogeneous product is obtained.

Tapes of any natural or synthetic material may in principle be used as reinforcing materials tapes in the present invention.
Use may be made of for instance tapes made of metal, semimetal, inorganic materials, organic materials or combinations thereof. It is essential that the tapes be suitable for use in ballistic applications, which, more specifically, requires that they have a high tensile strength, a high tensile modulus and a high energy absorption, reflected in a high energy-to-break. It is preferred for the tapes to have a tensile strength of at least 1.0 GPa, a tensile modulus of at least 40 GPa, and a tensile energy-to-break of at least 15 J/g.
In one embodiment, the tensile strength of the tapes is at least 1.2 GPa, more in particular at least 1.5 GPa, still more in particular at least 1.8 GPa, even more in particular at least 2.0 GPa. Tensile strength is determined in accordance with ASTM D882-00.
In another embodiment, the tapes have a tensile modulus of at least 50 GPa. The modulus is determined in accordance with ASTM D822-00. More in particular, the tapes may have a tensile modulus of at least 80 GPa, more in particular at least 100 GPa.
In another embodiment, the tapes have a tensile energy to break of at least 20 J/g, in particular at least 25 J/g.
The tensile energy to break is determined in accordance with ASTM D882-00 using a strain rate of 50%/min. It is calculated by integrating the energy per unit mass under the stress-strain curve.

Suitable inorganic tapes having a high tensile strength are for example tapes from glass, carbon, and ceramic materials. Suitable organic tapes having a high tensile strength are for example tapes made of aramid, of liquid crystalline polymer, and of highly oriented polymers such as polyesters, polyvinylalcoholes, polyolefineketone (POK), polybenzobisoxazoles, polybenz(obis)imidazoles, poly{2,6-diimidazo[4,5-b:4 ,5 - e]-pyridinylene-1,4(2,5-dihydroxy)phenylene} (PIPD or M5) and polyacrylonitrile. The use of combinations of materials is also envisaged, in particular the combination of polyolefins like polyethylene and polypropylene with glass, carbon, or ceramic materials is envisaged.

In the present invention the use of homopolymers and copolymers of polyethylene and polypropylene is preferred. These polyolefins may contain small amounts of one or more other polymers, in particular other alkene-1-polymers.
It is preferred for the tapes in the present invention sheet to be high-drawn tapes of high-molecular weight linear polyethylene. High molecular weight here means a weight average molecular weight of at least 300 000 g/mol. Linear polyethylene here means polyethylene having fewer than 1 side chain per 100 C atoms, preferably fewer than 1 side chain per 300 C atoms. The polyethylene may also contain up to 5 mol % of one or more other alkenes which are copolymerisable therewith, such as propylene, butene, pentene, 4-methylpentene, and octene.
It may be particularly preferred to use tapes of ultra-high molecular weight polyethylene (UHMWPE), that is, polyethylene with a weight average molecular weight of at least 500 000 g/mol. The use of tapes with a molecular weight of at least 1 * 10⁶ g/mol may be particularly preferred. The maximum molecular weight of the UHMWPE tapes suitable for use in the present invention is not critical. As a general value a maximum value of 1 * 10⁷ g/mol may be mentioned. The weight average molecular weight is determined in accordance with ASTM D 6474-99 at a temperature of 160 °C using 1,2,4-trichlorobenzene (TCB) as solvent. Appropriate chromatographic equipment (PD2040 from Polymer Laboratories) including a high temperature sample preparation device (PL-SP260) may be used.

The ballistic-resistant moulded article of the present invention may or may not comprise a matrix material. The term "matrix material" means a material which binds the tapes and/or the sheets together. In conventional ballistic materials based on fibres, matrix material is required to adhere the fibres together to form unidirectional monolayers. The use of sheets comprising woven tapes both as weft and as warp dispenses with the necessity of using matrix material for this reason, as the tapes are bonded together through their woven structure. Therefore, this will allow the use of less matrix material or even dispense with the use of matrix material altogether.

In one embodiment of the present invention the ballistic-resistant moulded article does not contain a matrix material. While it is believed that the matrix material has a lower contribution to the ballistic effectivity of the system than the tapes, the matrix-free embodiment may make an efficient material as regards its ballistic effectivity per weight ratio.

In another embodiment of the present invention, the ballistic resistant moulded article comprises a matrix material. In this embodiment, the matrix material may be present to improve the delamination properties of the material. It may also contribute to the ballistic performance.

In one embodiment of the present invention, matrix material is provided within the sheets themselves, where it serves to adhere tapes to each other, for example to stabilise the fabric after weaving. This embodiment can, for example, be obtained by providing the tape with a material which does not interfere with the tape-weaving process, but which will serve as a bonding material after application of heat and/or pressure.

In another embodiment of the present invention, matrix material is provided on the sheet, to adhere the sheet to further sheets within the stack.
One way of providing the matrix material onto the sheets is the provision of one or more films of matrix material on the top side, bottom side or both sides of the sheets. If so desired, the films may be caused to adhere to the sheet, e.g., by passing the films together with the sheet through a heated pressure roll or press.
Another way of providing the matrix material onto the sheets is by applying an amount of a liquid substance containing the organic matrix material onto the sheet. This embodiment has the advantage that it allows simple application of matrix material. The liquid substance may be for example a solution, a dispersion, or a melt of the organic matrix material. If a solution or a dispersion of the matrix material is used, the process also comprises evaporating the solvent or dispersant. Furthermore, the matrix material may be applied in vacuo. The liquid material may be applied homogeneously over the entire surface of the sheet, as the case may be. However, it is also possible to apply the matrix material in the form of a liquid material inhomogeneously over the surface of the sheet, as the case may be. For example, the liquid material may be applied in the form of dots or stripes, or in any other suitable pattern.

In one embodiment of the present invention the matrix material is applied in the form of a web, wherein a web is a discontinuous polymer film, that is, a polymer film with holes. This allows the provision of low weights of matrix materials.
In another embodiment of the present invention, the matrix material is applied in the form of strips, yarns, or fibres of polymer material, the latter for example in the form of a woven or non-woven yarn of fibre web or other polymeric fibrous weft. Again, this allows the provision of low weights of matrix materials.

In various embodiments described above, the matrix material is distributed inhomogeneously over the sheets. In one embodiment of the present invention the matrix material is distributed inhomogeneously within the compressed stack. In this embodiment more matrix material may be provided there were the compressed stack encounters the most influences from outside which may detrimentally affect stack properties.

The organic matrix material may wholly or partially consist of a polymer material, which optionally may contain fillers usually employed for polymers. The polymer may be a thermoset or thermoplastic or mixtures of both. Preferably a soft plastic is used, in particular it is preferred for the organic matrix material to be an elastomer with a tensile modulus (at 25°C) of at most 41 MPa. The use of non-polymeric organic matrix material is also envisaged. The purpose of the matrix material is to help to adhere the tapes and/or the sheets together where required, and any matrix material which attains this purpose is suitable as matrix material.
Preferably, the elongation to break of the organic matrix material is greater than the elongation to break of the reinforcing tapes. The elongation to break of the matrix preferably is from 3 to 500%. These values apply to the matrix material as it is in the final ballistic-resistant article.
Thermosets and thermoplastics that are suitable for the sheet are listed in for instance EP 833742 and WO-A-91/12136. Preferably, vinylesters, unsaturated polyesters, epoxides or phenol resins are chosen as matrix material from the group of thermosetting polymers. These thermosets usually are in the sheet in partially set condition (the so-called B stage) before the stack of sheets is cured during compression of the ballistic-resistant moulded article. From the group of thermoplastic polymers polyurethanes, polyvinyls, polyacrylates, polyolefins or thermoplastic, elastomeric block copolymers such as polyisoprene-polyethylenebutylene-polystyrene or polystyrene-polyisoprenepolystyrene block copolymers are preferably chosen as matrix material.

When a matrix material is used, it generally applied in an amount of at least 0.2 wt.%. It may be preferred for the matrix material to be present in an amount of at least 1 wt.%, more in particular in an amount of at least 2 wt.%, in some instances at least 2.5 wt.%. Matrix material is generally applied in an amount of at most 30 wt.%. The use of more than 30 wt.% of matrix material generally does not improve the properties of the moulded article. In some embodiments it may be preferred for the matrix material to be present in a amount of at most 8 wt.%, preferably at most 7 wt.%, sometimes at most 6.5 wt.%. In other embodiments, matrix material is present in an amount of at least 10 wt.%, more I particular at least 15 wt.%.

The compressed stack of sheets used in the ballistic-resistant material according to the invention, and the material itself, should meet the requirements of class II of the NIJ Standard - 0101.04 P-BFS performance test. In a preferred embodiment, the requirements of class IIIa of said Standard are met, in an even more preferred embodiment, the requirements of class III are met, or the requirements of even higher classes. This ballistic performance is preferably accompanied by a low areal weight, in particular an areal weight of at most 19 kg/m2, more in particular at most 16 kg/m2. In some embodiments, the areal weight of the stack may be as low as 15 kg/m2. The minimum areal weight of the stack is given by the minimum ballistic resistance required, and depends on the class.

The ballistic-resistant material according to the invention preferably has a peel strength of at least 5N, more in particular at least 5.5 N, determined in accordance with ASTM-D 1876-00, except that a head speed of 100 mm/minute is used.

Depending on the final use and on the thickness of the individual sheets, the number of sheets in the stack in the ballistic resistant article according to the invention is generally at least 2, in particular at least 4, more in particular at least 8. The number of sheets is generally at most 500, in particular at most 400.

The invention also pertains to a method for manufacturing a ballistic-resistant moulded article comprising the steps of providing sheets comprising tapes of a reinforcing material, wherein at least one sheet comprises woven tapes as weft and as warp, stacking the and compressing the stack under a pressure of at least 0.5 MPa.
The pressure to be applied is intended to ensure the formation of a ballistic-resistant moulded article with adequate properties. The pressure is at least 0.5 MPa. A maximum pressure of at most 50 MPA may be mentioned.

Where necessary, the temperature during compression is selected such that any matrix material is brought above its softening or melting point, if this is necessary to cause the matrix to help adhere the sheets to each other. Compression at an elevated temperature is intended to mean that the moulded article is subjected to the given pressure for a particular compression time at a compression temperature above the softening or melting point of the organic matrix material and below the softening or melting point of the tapes.

The required compression time and compression temperature depend on the nature of the tape, the nature of the matrix material, if present, and on the thickness of the moulded article and can be readily determined by one skilled in the art.
Where the compression is carried out at elevated temperature, the cooling of the compressed material should also take place under pressure. Cooling under pressure is intended to mean that the given minimum pressure is maintained during cooling at least until so low a temperature is reached that the structure of the moulded article can no longer relax and deform under atmospheric pressure. It is within the scope of the skilled person to determine this temperature on a case by case basis. Where applicable it is preferred for cooling at the given minimum pressure to be down to a temperature at which the organic matrix material has largely or completely solidified or crystallized and below the relaxation temperature of the reinforcing tapes. The pressure during the cooling does not need to be equal to the pressure at the high temperature. During cooling, the pressure should be monitored so that appropriate pressure values are maintained, to compensate for decrease in pressure caused by shrinking of the moulded article and the press.

Depending on the nature of the matrix material, if present, for the manufacture of a ballistic-resistant moulded article in which the reinforcing tapes in the sheet are high-drawn tapes of high-molecular weight linear polyethylene, the compression temperature is preferably 115 to 138°C and cooling to below 70°C is effected at a constant pressure. Within the present specification the temperature of the material, e.g., compression temperature refers to the temperature at half the thickness of the moulded article.

In the process of the invention the stack may be made starting from individual sheets. Individual sheets may sometimes be difficult to handle, however. Therefore, the present invention also encompasses an embodiment wherein the stack is made from consolidated sheet packages containing from 2 to 16 sheets, as a rule 2, 4 or 8. Consolidated is intended to mean that the sheets are firmly attached to one another. Very good results are achieved if the sheet packages, too, are compressed.

### Example 1

Sheets were woven from polyethylene tapes with a width of 40mm and a thickness of 50 µm. The tapes had a tensile strength of 1.2 GPa, a breaking energy of 15 J/g, and a tensile modulus of 80 GPa. The tapes were in a plain weave. The polyethylene had a molecular weight of 1.300 000.
46 sheets were stacked together and compressed at a temperature of 136-137 °C, at a pressure of 100 kN, 200 kN, 400 kN and 600 kN for 10 min, 5 min, 5 min, and 5 min respectively. The material was cooled down to 110 °C and removed from the press to form a ballistic material.

### Example 2

Example 1 was repeated, except that 115 sheets were stacked together.

## Claims

1. Ballistic-resistant moulded article comprising a compressed stack of sheets comprising tapes of a reinforcing material, **characterised in that** at least one sheet comprises woven tapes as weft and as warp.

2. Ballistic-resistant moulded article according to claim 1, wherein the tapes are high-molecular weight polyethylene tapes.

3. Ballistic-resistant moulded article according to claim 1 or 2, wherein the tapes have a width of at least 10 mm, in particular at least 20 mm, more in particular at least 40 mm.

4. Ballistic-resistant moulded article according to any one of the preceding claims wherein ratio between the width of the tapes in the weft direction and the width of the tapes in the warp direction is between 5:1 and 1:5, in particular between 2:1 and 1:2.

5. Ballistic-resistant moulded article according to any one of the preceding claims which does not comprise a matrix material.

6. Ballistic resistant moulded article according to any one of the preceding claims 1-5 wherein the compressed stack comprises a matrix material, in particular in an amount of 0.2-30 wt.%, more in particular in an amount of 0.2-8 wt.%.

7. Ballistic-resistant moulded article according to claim 5 wherein at least some of the sheets are substantially free from matrix material and matrix material is present between the sheets.

8. Ballistic-resistant moulded article according to any one of the preceding claims, which contains sheets comprises woven tapes as weft and as warp stacked on top of each other, the stacking being carried out in such a manner that the tape intersections of one sheet are not stacked on top of the tape intersections of neighbouring sheets.

9. Consolidated sheet package suitable for use in the manufacture of a ballistic-resistant moulded article of any one of the preceding claims, wherein the consolidated sheet package comprises 2-16 sheets, each sheet comprising tapes of a reinforcing material **characterised in that** at least one sheet comprises woven tapes as weft and as warp.

10. Method for manufacturing a ballistic-resistant moulded article comprising the steps of providing sheets comprising tapes of a reinforcing material, wherein at least one sheet comprises woven tapes as weft and as warp, stacking the and compressing the stack under a pressure of at least 0.5 MPa.
